# EUROPÄISCHE PATENTSCHRIFT

(11) **EP 0 996 603 B1**
(45) Veröffentlichungstag und Bekanntmachung des Hinweises auf die Patenterteilung: **26.06.2002**
(21) Anmeldenummer: 98928336.1
(22) Anmeldetag: 29.05.1998
(51) Int. Cl.: C04B 41/52, C04B 41/45, C03C 8/22

(54) **VERFAHREN ZUR HERSTELLUNG KERAMISCHER UND GLASIGER BESCHICHTUNGEN, ELEKTROSTATISCH APPLIZIERBARES BESCHICHTUNGSPULVER HIERFÜR UND SEINE VERWENDUNG**
METHOD FOR PRODUCING CERAMIC AND GLASS COATINGS, ELECTROSTATICALLY APPLICABLE COATING POWDER USED THEREIN AND THE USE THEREOF
PROCEDE POUR LA FABRICATION DE REVETEMENTS CERAMIQUES ET VITREUX, POUDRE DE REVETEMENT APPLICABLE PAR VOIE ELECTROSTATIQUE A CET EFFET ET SON UTILISATION

(30) Priorität: 24.06.1997 DE 19726778
(43) Veröffentlichungstag der Anmeldung: 03.05.2000
(73) Patentinhaber: dmc2 Degussa Metals Catalysts Cerdec AG, 60287 Frankfurt am Main (DE); British Ceramic Research Limited, Stoke-on-Trent Staffordshire ST4 7LQ (GB)
(72) Erfinder: SCHRIENER, Andreas, D-61350 Bad Homburg (DE); TRIPTRAP, Herbert, D-60389 Frankfurt am Main (DE); JACKSON, Philip, Robert, Stoke-on-Trent ST4 8XN (GB); WITHINGTON, Steven, Charles, Stoke-on-Trent ST6 4JB (GB); SHINGLER, David, Stoke-on-Trent ST4 2RD (GB)
(74) Vertreter: Reinhardt, Markus, Dipl.-Ing.
(86) Internationale Anmeldenummer: EP9803222
(87) Internationale Veröffentlichungsnummer: WO9858889

(56) Entgegenhaltungen:
- EP-A- 0 453 897
- EP-A- 0 599 106
- EP-A- 0 658 523
- EP-A- 0 700 878
- DE-C- 19 531 170

## Beschreibung

Die Erfindung richtet sich auf ein Verfahren zur Herstellung keramischer und glasiger Beschichtungen, insbesondere Glasuren und Engoben, umfassend elektrostatischen Auftrag eines Beschichtungspulvers auf ein keramisches Substrat und Brennen des beschichteten Substrats. Ein weiterer Gegenstand richtet sich auf ein zur Durchführung des Verfahrens besonders geeignetes Beschichtungspulver sowie seine Verwendung.

Zur Herstellung von keramischen und glasigen Beschichtungen, etwa Engoben und Glasuren, auf keramischen, insbesondere ungebrannten oder teilweise gebrannten, Substraten werden überwiegend wäßrige Schlicker eingesetzt. Nach der Applikation des Schlickers wird das hiermit beschichtete Substrat gebrannt, wobei das im Schlicker enthaltende einbrennfähige Material zu einer keramischen oder glasigen Schicht zusammensintert oder schmilzt. Aufgrund der mit der Verwendung wäßriger Schlicker verbundenen Nachteile, wie Abwasserprobleme und hoher Energiebedarf, gewinnt die elektrostatische Pulverbeschichtung keramischer Erzeugnisse an Bedeutung.

Die elektrostatische Beschichtung keramischer Substrate, wie Porzellan, Steingut und Steinzeug, insbesondere aber ungebrannter oder nur teilweise gebrannter Substrate bereitet derzeit noch etliche Probleme hinsichtlich des elektrostatischen Auftrags des Beschichtungspulvers, der ungenügenden Haftung des Pulvers auf dem Substrat und oft auch unzureichende Griffestigkeit. Hinzu kommen erst beim Brand auftretende Glasurfehler.

Zur Lösung der Elektrostatik- und Haftungsprobleme wurden verschiedene Wege beschritten: So läßt sich gemäß DE-PS 29 41 026 Glasurpulver auf einen für den Elektrostatikauftrag erforderlichen Wert für den spezifischen Oberflächenwiderstand von größer 1 · 10¹⁰ Ohm · m durch Beschichtung mit einem Polysiloxan bringen. Auch Engoben sind nach einer solchen Hydrophobierung dem elektrostatischen Pulverauftrag zugänglich (EP-A 0 442 109). Gemäß DE-A 42 39 541 läßt sich zwar die Haftung eines elektrostatisch applizierten Glasurpulvers verbessern, wenn zunächst eine wäßrige Haftschicht, enthaltend ein Polymer und eine Glasfritte, auf das Substrat aufgebracht wird, jedoch wird der Einsatz eines wäßrigen Systems als nachteilig angesehen.

Die EP-A 0 700 878 lehrt ein zweikomponentiges Beschichtungspulver, bei dem die höher schmelzende Komponente, die Zusatzfritte, eine Schmelztemperatur von über 750°C und dessen niedriger schmelzenden Komponente, die Basisfritte, eine Schmelztemperatur von höchstens 650°C aufweist. Das Beschichtungspulver enthält gemäß Beispeil 1 ein Polyacrylat. Beschichtet werden typischer Weise Gläser, wonach Antihafteigenschaften erhalten werden.

Die EP 0 453 897 A1 lehrt ein elektrostatisch aufzubringendes zweikomponentiges Beschichtungspulver für Metallsubstrate, das im Bereich von 450°C bis 620°C eingebrannt werden kann. Das Pulver enthält eine Glasfritte mit einem Erweichungspunkt unter 480°C und anorganische Inertstoffe.

Eine Verbesserung der Haft- und Griffestigkeit eines elektrostatisch auf ein Substrat aufgebrachten einbrennfähigen Beschichtungspulvers, etwa eines Glasurpulvers, lehrt die WO 94/26679: Das Beschichtungspulver enthält hierbei außer einem Glasurpulver, ein chemisch oder physikalisch aktivierbares, beim Brand rückstandsfrei verbrennendes Haftmittel, wie Polyolefine und Dextrine, womit nach der Aktivierung die Teilchen der Schicht untereinander und mit dem Substrat fixiert werden. Bevorzugte Beschichtungspulver enthalten Polysiloxan-beschichtete Glasfritten im Gemisch mit 10 bis 15 Gew.-% Thermoplast oder 5 bis 10 Gew.-% Dextrin. Nur unter besonders optimierten Bedingungen, welche aber zu einem hohen Aufwand führen, ist es möglich, auf Porzellan-Bisquitscherben brauchbare Glasuren zu erhalten. Unter bereits geringfügig modifizierten Bedingungen kommt es in Abhängigkeit vom Substrat zu teilweise erheblichen Glasurfehlern und Störungen vor Erreichen der geforderten Schichtdicke.

Eine Verbesserung der vorgenannten Probleme lehrt die WO 97/08115: Durch Verwendung einer Glasur- oder Engobezusammensetzung mit einer bestimmten Kornverteilung, nämlich einem d₅₀-Wert von 5 bis 25 µm, einem d₉₀-Wert von kleiner 35 µm und einem d₁₀-Wert von gleich oder größer 2 µm, in einem zusätzlich ein Haftmittel enthaltenden Beschichtungspulver, ist es möglich, ohne Qualitätseinbuße der Glasur das Herstellungsverfahren zu vereinfachen.

Während die beiden zuvor gewürdigten Verfahren erlauben, fehlerfreie Glasuren auf gebrannten oder bisquitgebrannten Porzellanscherben herzustellen, treten bei der gattungsgemäßen Herstellung von Glasuren und Engoben auf ungebrannten Scherben, etwa Wand- und Bodenfliesen, erhebliche Qualitätsmängel der eingebrannten Beschichtung auf. Auch bei bisquit-gebrannten Scherben ist die Fehlerhäufigkeit in der Glasur oft noch zu hoch. Die Fehler äußern sich oft in Form großer "eingefrorener" Blasen und großflächiger glasurfreier Teile - diese Fehler werden auch als "Abroller" bezeichnet. Oft nehmen diese Fehler 10 bis 30 % der genannten Oberfläche ein. Die Ursache dieser Fehler wird in folgenden Wechselwirkungen vermutet: Die elektrostatisch applizierte Schicht ist viel lockerer und weist zudem eine viel geringere Haftung zum Substrat auf als eine unter Verwendung konventioneller Schlicker erhaltene Schicht. Während des Brands eines mit einer Glasurschicht versehenen Rohscherbens finden gasbildende Reaktionen im Rohscherben, in der Grenzschicht zwischen dem Scherben und der Glasurschicht sowie in der Glasurschicht statt - hierzu gehören beispielsweise die Umwandlung von Kaolin in Metakaolin, welche insbesondere bei einer Temperatur im Bereich von etwa 700 bis 800 °C stattfindet und die Abspaltung von CO₂ aus im Scherben enthaltenen Carbonaten, etwa Dolomit, welche um 900 °C erfolgt. Bei ungenügender Dichte und Haftung ist die Schicht nach dem Verbrennen eines zunächst anwesenden organischen Haftmittels während des Brands bis zu jener Temperatur, bei welcher die Glasur schmilzt, labil, so daß sie durch geringe mechanische Einwirkungen, etwa Erschütterungen und Luftströmungen im Brennofen sowie durch Entgasungsprozesse aus dem Scherben gestört werden kann. Eine dieser Störungen zeigt sich in einem flächigen Anheben der elektrostatisch applizierten Schicht mit der Folge der Bildung von Blasen und glasurfreien Stellen nach Aufreißen der Blasen. Offensichtlich wird bei der konventionellen Technik durch Kapillarkräfte beim Applizieren des Schlickers eine gute Verankerung der Schicht mit dem Rohscherben bewirkt, so daß die genannten Störungen nicht auftreten, wohingegen eine solche Verankerung bei der elektrostatischen Applizierung fehlt.

Aufgabe der vorliegenden Erfindung ist es demgemäß, die aufgezeigten Probleme bei der Herstellung von keramischen und glasigen Beschichtungen, insbesondere Glasuren, wobei das Beschichtungspulver elektrostatisch appliziert wird, zu beheben. Die Beschichtungen können nach dem Brand kristalline und/oder amorphe Anteile enthalten.

Gefunden wurde ein Verfahren zur Herstellung einer keramischen und/oder glasigen Beschichtung, insbesondere einer Glasur, auf einem keramischen Substrat, umfassend elektrostatischer Auftrag eines Beschichtungspulvers und Brennen des beschichteten Substrats, das dadurch gekennzeichnet ist, daß man ein Beschichtungspulver CP_{AB} verwendet, das 1 bis 50 Gew.-% einer schichtbildenden Zusammensetzung A mit einem Erweichungsbeginn im Bereich von 400 bis 750 °C und 99 bis 50 Gew.-% einer schichtbildenden Zusammensetzung B mit einem Erweichungsbeginn im Bereich von oberhalb 750 bis 1100 °C enthält, oder, daß man unter Verwendung eines mindestens 5 Gew.-% der schichtbildenden Zusammensetzung A enthaltenden Beschichtungspulvers CP_{U} auf das keramische Substrat eine Unterschicht und darüber unter Verwendung eines mindestens 50 Gew.-% der schichtbildenden Zusammensetzung B enthaltenden Beschichtungspulvers CP_{O} eine Oberschicht aufbringt, wobei mindestens eine der beiden Schichten elektrostatisch appliziert und die Unterschicht mindestens 1 % der gesamten Beschichtung ausmacht. Unter dem Begriff "schichtbildend" wird verstanden, daß die Zusammensetzung beim Brand zur Schichtbildung aus einem kristallinen und/oder amorphen, also keramischen und/oder glasigen Material befähigt ist.

Kern der Erfindung ist die Verwendung einer schichtbildenden Zusammensetzung A, welche einen Erweichungsbeginn T(EB)_{A} unterhalb des Erweichungsbeginns T(EB)_{B} einer schichtbildenden Zusammensetzung B aufweist, wobei die Zusammensetzung B den Hauptanteil der herzustellenden keramischen Beschichtung ausmacht. Bei der schichtbildenden Zusammensetzung A handelt es sich bevorzugt um eine niedrig schmelzende Glaszusammensetzung. Bei dem Hauptanteil der Beschichtung handelt es sich um Zusammensetzungen, wie sie zum Glasieren, Engobieren und anderweitigen Dekorieren keramischer Substrate Anwendung finden. Erfindungsgemäß handelt es sich bei den zu beschichtenden keramischen Substraten insbesondere um solche, in welchen oder an deren Grenzschicht zur aufgetragenen Beschichtung während des Brands Entgasungsprozesse ablaufen; hierzu gehören ungebranntes oder geschrühtes Steingut und Steinzeug sowie ungebranntes und bisquit-gebranntes Porzellan. Besondes geeignete Substrate sind ungebrannte Wand- und Bodenfliesen sowie Dachziegel. Die Zusammensetzung A ist in wirksamer Menge entweder Bestandteil des unmittelbar als eine einzige Schicht applizierten Beschichtungspulvers CP_{AB} oder in wirksamer Menge Bestandteil eines Beschichtungspulvers CP_{U} für eine untere Schicht, über welcher eine obere Schicht aus einem anders zusammengesetzten Beschichtungspulver CP_{O} angeordnet wird.

Die Funktion der Zusammensetzung A wird darin gesehen, daß mit ihr eine gute Haftung der Beschichtung auf dem Substrat während des Brennvorgangs bewirkt wird. Die Zusammensetzung A wird dabei so ausgewählt, daß ihr Erweichungsbeginn vorzugsweise unterhalb jener Temperatur liegt, bei welcher Entgasungsprozesse innerhalb des Substrats, an der Grenzschicht sowie innerhalb der Beschichtung stattfinden. Durch das Schmelzen der Zusammensetzung A vor Eintreten der genannten Entgasungsprozesse werden bei dem erfindungsgemäß bevorzugten einschichtigen Aufbau unter Einsatz des Beschichtungspulves CP_{AB} während des Brands sowohl zum Subtrat eine gute Haftung als auch ein guter Zusammenhalt der Beschichtung selbst bewirkt. Damit werden eine Blasenbildung, eine Verschiebung der gesamten Schicht durch beispielsweise Vibration in einem Durchschubofen oder Wegblasen in einem stationären, von Brennen betriebenen Ofen vermieden. Damit läßt sich der Flächenanteil an Abrollern (= gesamte Fehlerfläche) bei optimaler Auswahl der Zusammensetzung und Einsatzmenge auf Null reduzieren. Die Entgasung aus dem Substrat kann teilweise durch die Rückseite desselben und/oder durch die gesinterte Beschichtung erfolgen.

Bei dem alternativen zweischichtigen Aufbau bewirkt die untere Schicht die Haftung zum Substrat. Selbst wenn die untere Schicht viel dünner ist als die darüber befindliche obere Schicht, werden Abroller beim Brand vermieden. Die Dicke der unteren Schicht beträgt mindestens 1 % und meist weniger als 50 %, insbesondere 2 bis 30 % der Gesamtdicke beider Schichten. Die Applizierung eines niedrig schmelzenden Glasflusses als untere Schicht mit geringer Schichtdicke hat den Vorteil, daß die Eigenschaften der oberen, für den Gebrauch maßgeblichen Schichte weniger beeinflußt werden.

Die Gesamtdicke der ein- oder zweischichtigen keramischen und/oder glasigen Beschichtung liegt nach dem Brennen im üblichen Rahmen, wie er aus dem Stand der Technik, etwa dem Glasieren und Engobieren unter Verwendung von wäßrigen Schlickern bekannt ist - also meistens im Bereich von 50 bis 1000 µm, insbesondere 100 bis 500 µm, und bei Glasuren besonders bevorzugt im Bereich von 200 bis 300 µm.

Die chemische Zusammensetzung der schichtbildenden Zusammensetzung A, die bei beiden alternativen Ausführungsformen Bestandteil der mit dem keramischen Substrat in Kontakt stehenden Schicht ist, ist zwar für den Erweichungsbeginn und den Schmelzverlauf, bestimmt als T(EB) und T(HK) (= Halbkugelpunkt) im Erhitzungsmikroskop, maßgeblich, für das Endergebnis der ein- oder zweischichtigen Beschichtung aber von geringerer Bedeutung. Die Zusammensetzung A kann in Form einer Glasfritte oder in Form eines pulverförmigen Stoffgemischs vorliegen, das bei T(EB) unter Glasbildung zu erweichen beginnt. Bevorzugt werden Glasfritten. Im Falle der Verwendung eines Stoffgemischs liegt dieses zweckmäßigerweise in Form eines zuvor homogenisierten und sprühgranulierten Pulvers vor. Es ist bekannt, daß Gläser mit niedrigem Erweichungspunkt, in der Dekortechnik auch als Flüsse bezeichnet, durch hohe Anteile an Oxiden aus der Reihe PbO, Bi₂O₃, ZnO, B₂O₃ und Alkalioxiden gekennzeichnet sind. Sofern eine ungefrittete Zusammensetzung A verwendet wird, kann diese eine oder mehrere Stoffe aus der Reihe der Alkaliborate, Alkalisilikate, Bleiborsilikate, Wismutborsilikate und Zinkborsilikate enthalten. Vorzugsweise liegt die Zusammensetzung A zu 80 bis 100 Gew.-%, bezogen auf glasbildende Komponenten, in Form einer Glasfritte vor.

Zweckmäßgerweise wird die Zusammensetzung A in feinst gemahlener Form eingesetzt. Eine gute Wirkung bei niedriger Einsatzmenge wird dann erzielt, wenn das Kornspektrum wesentlich feiner ist als dasjenige der schichtbildenden Zusammensetzung B. Vorzugsweise liegt der d₅₀-Wert der Zusammensetzung A im Bereich von 1 bis 5 µm und der d₉₀-Wert unterhalb des d₅₀-Werts der Zusammensetzung B.

Der Erweichungsbeginn der zu verwendenden Zusammensetzung A liegt meistens im Bereich von 400 bis 650 °C, insbesondere im Bereich von 450 bis 600 °C. Ein Erweichungsbeginn um 500 °C ist besonders bevorzugt, weil damit sichergestellt wird, daß beim Brand im Anschluß an das Verbrennen eines im Beschichtungspulver zusätzlich anwesenden organischen Haftmittels, das zunächst für eine gute Haft- und Griffestigkeit der Schicht verantwortlich ist, die schichtbildende Zusammensetzung A ihre Wirkung entfaltet.

Bei der schichtbildenden Zusammensetzung B handelt es sich um eine solche, welche um/oberhalb 750 °C, vorzugsweise bei 800 bis 1050 °C und insbesondere im Bereich von 900 bis 1000 °C zu erweichen beginnt. Die Zusammensetzung B sollte erst dann zu erweichen beginnen, wenn die Zusammensetzung A soweit geschmolzen ist, daß die erforderliche Haftung zum Substrat und innerhalb der die Zusammensetzung B enthaltenden Beschichtung eingetreten ist. Die chemische Zusammensetzung der Zusammensetzung B entspricht jener, wie sie für gattungsgemäße Beschichtungen, wie insbesondere Glasuren und Engoben, üblich ist. Dem Fachmann sind derartige Zusammensetzungen vertraut - beispielhaft wird auf Ullmann's encyclopedia of industrial chemistry 5th ed. 1986, Seiten 31-33 verwiesen. Bei den Glasuren, die erfindungsgemäß eingesetzt werden, handelt es sich vorzugsweise um Systeme, deren Hauptanteil als Glasfritte vorliegt, ein kleinerer Anteil, nämlich bis zu 30 Gew.-%, vorzugsweise bis zu 10 Gew.-%, kann aber in Form weiterer Komponenten, wie Tonmineralien, etwa Kaolin, und/oder Nepholinsyenit anwesend sein. Solche Systeme eignen sich insbesondere für sogenannte Einmal-Schnellbrandglasuren, wie sie für die Glasur von Wandfliesen Verwendung finden, welche bei etwa 1100 °C (± 50 °C) eingebrannt werden. Glasuren für Fußbodenfliesen werden strenger eingestellt, auf eine T(EB) um/über 900 °C und eine Brenntemperatur um 1200 °C. Derartige Glasuren enthalten üblicherweise einen geringeren Anteil an Glasfritten; beispielhafte Zusammensetzungen enthalten im wesentlichen (Gew.-%) 30 bis 50 % Glasfitte, 5 bis 15 % Wollastonit (Ca-siliakt), 5 bis 15 % Tonerde (Al₂O₃), 0 bis 15 % Zirkoniumsilikat, 5 bis 15 % Kaolin sowie bei Bedarf Buntpigmente. Glasuren auf der Basis der vorgenanten Stoffgemische werden zweckmäßigerweise in Form eines Sprühgranulats eingesetzt.

Wesentliche Komponenten für Engoben sind Glasfritten, feinteilige Keramikrohstoffe, gemahlene Mineralien, Glas und Porzellanmehl sowie Trübungsmittel und/oder Pigmente. Auch hier ist die Verwendung von sprühgetrockneten Granulaten zweckmäßig, weil Entmischungen vermieden werden und ein einheitliches Schmelzverhalten erzielt wird.

Vorzugsweise besteht die Zusammensetzung B zu 30 bis 100 Gew.-% aus einer oder mehreren Glasfritten.

Gemäß einer bevorzugten Ausführungsform weisen sowohl das für die einschichtige Beschichtung zu versprühende Beschichtungspulver CP_{AB} als auch das für die zweischichtige Beschichtung zu verwendende Pulver CP_{O} und gegebenenfalls auch CP_{U} ein Kornspektrum auf, wie es in der WO 97/08115 gelehrt wird - d₅₀ 5 bis 25 µm, d₁₀ ≥ 2 µm und d₉₀ kleiner 35 µm.

Sowohl das Pulver der Zusammensetzung A als auch B oder des A und B enthaltenden Gemischs kann, sofern dies aus elektrostatischen Gründen erforderlich ist, eine bekannte hydrophobierende Umhüllung aufweisen, beispielsweise eine solche aus einem Polysiloxan.

Das für die einschichtige Beschichtung zu verwendende Beschichtungspulver CP_{AB} enthält 1 bis 50 Gew.-% einer schichtbildenden Zusammensetzung A mit einem Erweichungsbeginn im Bereich von 400 bis 750 °C und 99 bis 50 Gew.-% einer schichtbildenden Zusammensetzung B mit einem Erweichungsbeginn im Bereich von oberhalb 750 bis 1100 °C und zusätzlich bis zu 20 Gew.-% eines oder mehrerer chemisch oder thermisch aktivierbarer Haftmittel aus der Reihe organischer Polymerer. Vorzugsweise enthält CP_{AB} aber 2,5 bis 25 Gew.-% A und 97,5 bis 75 Gew.-% B, jeweils bezogen auf alle keramik- oder/und glasschichtbildenden Komponenten. Vorzugsweise enthält das Beschichtungspulver CP_{AB} insgesamt 75 bis 95 Gew.-%, insbesondere 90 bis 95 Gew.-% keramik- und/oder glasschichtbildende Komponenten; soweit CP_{AB} in größerer Menge Buntpigmente enthält, kann die Summe aus A und B noch niedriger sein. Die Zusammensetzungen A und B können jeweils mehrere Glasfritten enthalten, deren T(EB) im anspruchsgemäßen Bereich liegt. Ein zu hoher Anteil A mit zu niedrigem T(EB)_{A} in CP_{AB} ist zu vermeiden, da es in solchen Fällen zu einer Ausbildung einer welligen Oberfläche und/oder nadelstichartigen Glasurlöchern kommen kann. Der Fachmann wird durch orientierende Vorversuche die für eine fehlerfreie Glasur oder Engobe oder Dekoration am besten geeignete Abmischung der Zusammensetzung B mit der Zusammensetzung A bezüglich T(EB)_{A} und der Menge A, bezogen auf B, ermitteln.

Zum Zwecke der zweischichtigen Beschichtung kann die untere Schicht eine Zusammensetzung ähnlich jener von CP_{AB} mit allerdings mindestens 5 Gew.-% der Zusammensetzung A und bis zu 95 Gew.-% der Zusammensetzung B aufweisen. Alternativ kann die untere Schicht ausschließlich eine Zusammensetzung gemäß A enthalten. In diesem Fall wird die Schichtdicke der unteren Schicht möglichst nicht mehr als 10 % der gesamten Dicke beider Schichten ausmachen. Die obere Schicht enthält als Hauptkomponente (≥ 50 %) des Beschichtungspulvers CP_{O} eine schichtbildende Zusammensetzung B. Zusätzlich kann aber das Beschichtungspulver CP_{O} auch eine Zusammensetzung A enthalten, und zwar in geringerer Menge als sie in CP_{U} enthalten ist.

Es ist bekannt, daß elektrostatisch zu applizierende Beschichtungspulver, vorzugsweise Glasuren, außer keramikund/oder glasschichtbildenden Komponenten ein oder mehrere chemisch oder physikalisch, insbesondere thermisch aktivierende Haftmittel enthalten können. Dies trifft auch für das erfindungsgemäße Verfahren und die hierfür zu verwendenden Beschichtungspulver zu, so daß diese vorzugsweise eine wirksame Menge derartiger Haftmittel enthalten. Einsetzbar sind zum Bespiel Thermoplaste und chemisch härtende Reaktionsharze sowie durch Feuchte aktivierbare Stoffe. Bezüglich der Stoffauswahl, Einsatzmenge und Funktion der Haftmittel wird ausdrücklich auf die WO 94/26679 und WO 97/08115 hingewiesen. Geeignete Haftmittel, welche durch eine thermische Behandlung aktivierbar sind, sind thermoplastische Homo- und Copolymere mit einem Erweichungspunkt im Bereich zwischen 60 und 250 °C, vorzugsweise zwischen 80 und 200 °C und insbesondere zwischen 80 und 150 °C. Bei den thermoplastischen Haftmitteln handelt es sich vorzugsweise um Polyolefine, wie Paraffinwachs und Polyethylen niederer Dichte (ld-PE), ferner um Acrylat- und Methacrylatpolymere und -copolymere, Polyvinylverbindungen, wie Polystyrol, Polyvinylacetat, Ethylen/Vinylacetat-copolymere, Stryrol/Acrylat-copolymere; verwendbar sind auch Polyester und Copolyester sowie Polyamide und Copolyamide.

Gemäß einer weiteren Ausführungsform werden hydrophile und hydrophobe Polymere derart als thermisch aktivierbare Haftmittel miteinander kombiniert, daß die gegebenenfalls noch Restfeuchte enthaltenden Glasurpulver und/oder das zu glasierende Substrat zuverlässig benetzt werden. Hydrophile Polymere weisen Strukturelemente auf, die zur Wasserstoffbrückenbindung befähigt sind, beispielsweise Hydroxylgruppen, Carboxylgruppen und/oder Etherbrücken.

Es ist vorteilhaft, wenn der Durchmesser der Teilchen des/der im Beschichtungspulver eingesetzten Haftmittel innerhalb des Teilchenspektrums der einbrennfähigen Zusammensetzungen liegt. Besonders bevorzugt liegt der mittlere Teilchendurchmesser d₅₀ des Haftmittels unterhalb des d₅₀-Wertes der einbrennfähigen Zusammensetzungen. Ein enges Kornspektrum und zudem ein kugelförmiger Habitus des Haftmittels werden besonders bevorzugt.

Bei der chemischen Aktivierung handelt es sich beispielsweise um eine Polymerisation, etwa einer Vernetzung in Gegenwart eines mehrfunktionellen Acrylats oder Methacrylats, oder um eine Polyaddition oder Polykondensation von Zweistoffsystemen. Bei der physikalischen Aktivierung handelt es sich vorzugsweise um ein Anschmelzen des Haftmittels mit nachfolgender Abkühlung und Erstarrung. Diese Art Aktivierung läßt sich durch Erhitzen des zu beschichtenden Substrats vor, während oder nach der elektrostatischen Beschichtung bewirken und kann unter Verwendung üblicher Öfen oder Bestrahlung mittels Infrarotstrahlern erfolgen.

Es hatte sich gezeigt, daß ein oder mehrere einbrennfähige Zusammensetzungen und ein oder mehrere Haftmittel aus der Reihe der Polyolefine, insbesondere Polyethylen, enthaltende Beschichtungspulver zweckmäßigerweise innerhalb etwa eines Tages nach ihrer Herstellung in einer Intensiv-Misch- oder Mahlvorrichtung elektrostatisch appliziert werden sollte, um gegebenenfalls alterungsbedingte Nachteile zu vermeiden.

Es wurde gefunden, daß es im Hinblick auf den Erhalt fehlerfreier eingebrannter Beschichtungen besonders vorteilhaft ist, das Haftmittel durch einen intensiven Misch- und/oder Mahlprozeß in das schichtbildende Pulver einzuarbeiten. Die beim Einarbeiten auftretende Temperatur muß unterhalb der Aktivierungstemperatur eines durch Schmelzen oder eine chemische Reaktion aktivierbaren Haftmittels liegen. Besonders vorteilhaft verwendbare Intensiv-Misch- oder Mahlvorrichtungen enthalten ein hochrotierendes Schlagwerk, das mit einer Drehzahl im Bereich von 2000 bis 20000 UpM, insbesondere etwa 5000 bis 15000 UpM, betrieben wird. Die genannte Maßnahme der Einarbeitung eines oder mehrerer Haftmittel in ein eine oder mehrere einbrennfähige schichtbildende Zusammensetzungen enthaltendes Beschichtungspulver mittels eines Intensiv-Mischers oder einer Intensiv-Mühle ist für alle elektrostatisch zu applizierenden Beschichtungspulver vorteilhaft, also auch solche, welche auf Glas oder gebrannte keramische Substrate oder Metall aufgebracht werden. Bevorzugt wird hierfür eine Intensivmühle aus der Reihe der Schlag- und Strahlmühlen eingesetzt. Die Drehzahl der Schlagmühlen, etwa einer Stiftmühle oder Stift-Schlagmühle, sollte beim Mischen möglichst hoch sein. Meist wird die Drehzahl im Bereich von 2000 bis 20000 UpM (Umdrehungen pro Minute), insbesondere 5000 bis 15000 UpM, liegen.

Gemäß einer bevorzugten Ausführungsform werden zur Herstellung von Haftmittel enthaltenden Beschichtungspulvern Haftmittel mit einem engen Kornspektrum, beispielsweise Polyethylenwachs mit einem Kornbereich von im wesentlichen 1 bis 20 µm, insbesondere etwa 5 bis etwa 10 µm, für 90 % des Pulvers verwendet.

Die Beschichtungspulver CP_{AB} sowie CP_{O} und/oder CP_{U} können zusätzlich Pigmente, welche unter den Brennbedingungen stabil sind, enthalten. Der Pigmentanteil wird im allgemeinen 20 Gew.-% nicht überschreiten. Farbige Beschichtungen können auch durch den Einsatz von Farbfritten erhalten werden.

Zusätzlich können die Beschichtungspulver CP_{AB}, CP_{O} und CP_{U} zum Zwecke einer störungsfreien Verarbeitung Hilfsmittel in einer Menge von im allgemeinen bis zu 5 Gew.-%, meistens aber nur bis zu 2 Gew.-%, enthalten. Beispiele sind Fluidisierungshilfsmittel. Bei den Fluidisierungshilfsmitteln handelt es sich insbesondere um pyrogen hergestellte Oxide, welche ihrerseits hydrophobiert sein können. Geeignete Fluidisierungsmittel sind beispielsweise Kieselsäure, Titandioxid und Aluminiumoxid und ZrO₂. Vorbekannte Beschichtungspulver enthalten derartige Fluidisierungshilfsmittel vielfach in einer Menge zwischen 0,5 und 3 Gew.-%; bevorzugte erfindungsgemäße Beschichtungspulver enthalten 0 bis 0,3 Gew.-%, insbesondere 0 bis 0,2 Gew.-%, Fluidisierungsmittel, beispielsweise pyrogenes SiO₂ (Aerosil® der Fa. Degussa AG), bezogen auf einbrennfähiges Material.

Weitere in den Beschichtungspulvern gegebenenfalls anwesende Hilfsmittel sind solche, womit die elektrischen Eigenschaften der Pulver so verändert werden können, daß der spezifische elektrische Widerstand ein störungsfreies elektrostatisches Besprühen ermöglicht. Beispiele solcher Hilfsmittel sind Hydrophobierungsmittel. Der spezifische elektrische Widerstand der Beschichtungspulver sollte im allgemeinen im Bereich von etwa 10⁹ bis etwa 10¹⁴ Ohm ^{.} m liegen.

Das ein- bzw. zweischichtige Aufbringen der Beschichtung durch elektrostatisches Besprühen erfolgt in an sich bekannter Weise unter Verwendung einer Hochspannungspistole, welche nach dem Corona- oder Supercorona-Prinzip arbeitet. Die Spannung liegt üblicherweise bei 30 bis 100 kV, insbesondere 40 bis 80 kV, die Stromstärke bei 40 bis 80 µA.

Gemäß einer bevorzugten Ausführungsform des Verfahrens wird das zu beschichtende Substrat vor dem Besprühen vorerwärmt, zweckmäßigerweise auf 100 bis 250 °C, weil hierdurch, wie aus der WO 97/08115 folgt, die Haftfestigkeit des Pulvers auf dem Substrat verbessert und damit die Handhabbarkeit des ungebrannten beschichteten Substrats erleichtert wird. Auch eine Vorbehandlung des Substrats mit einem Salz gemäß WO 94/26679 ist möglich.

Das Brennen des beschichteten Substrats erfolgt in üblicher Weise in bekannten Brennöfen. Die Brenntemperatur richtet sich nach der Zusammensetzung des ungebrannten oder geschrühten Substrats und der Beschichtung, üblicherweise liegt sie aber im Bereich oberhalb etwa 900 °C bis etwa 1450 °C, meistens 1000 bis 1300 °C.

Ein weiterer Gegenstand der Erfindung richtet sich auf ein elektrostatisch applizierbares Beschichtungspulver CP_{AB}, umfassend eine beim keramischen Brand schichtbildende Zusammensetzung, das dadurch gekennzeichnet ist, daß es 1 bis 50 Gew.-% einer schichtbildenden Zusammensetzung A mit einem Erweichungsbeginn im Bereich von 400 bis 750 °C und 99 bis 50 Gew.-% einer schichtbildenden Zusammensetzung B mit einem Erweichungsbeginn im Bereich von oberhalb 750 bis 1100 °C und zusätzlich bis zu 20 Gew.-% eines oder mehreren chemisch oder thermisch aktivierbarer Haftmittel aus der Reihe organsicher Polymere enthält. Das Beschichtungspulver CP_{AB} enthält vorzugsweise 2,5 bis 25 Gew.-% einer schichtbildenden Zusammensetzung A und 75 bis 97,5 Gew.-% einer schichtbildenden Zusammensetzung B, jeweils bezogen auf schichtbildende Komponenten, also der Summe aus A und B. Ein besonders bevorzugtes Beschichtungspulver besteht im wesentlichen aus 75 bis 95 Gew.-% einer Zusammensetzung B, 3 bis 10 Gew.-% einer Zusammensetzung A, 2 bis 10 Gew.-% eines thermisch oder chemisch aktivierbaren organischen Polymers, 0 bis 2 Gew.-% Fluidierungsmitteln und Hilfsstoffen zur Einstellung des spezifischen Oberflächenwiderstands, etwa einem Carbonsäuresalz. Die schichtbildenden Zusammensetzungen A und B weisen in dem Beschichtungspulver CP_{AB} zusammen vorzugsweise einen d₅₀-Wert von 5 bis 25 µm, einen d₉₀-Wert von kleiner 35 µm und einen d₁₀-Wert von gleich oder größer 2 µm auf. Die d₁₀-, d₅₀- und d₉₀-Werte geben den Korndurchmesser für 10 %, 50 % und 90 % Durchgang an (Bestimmung nach DIN 66141, zum Beispiel mittels des CILAS Granulometers HR 850-B).

Durch Anwendung des erfindungsgemäßen Verfahrens in den alternativen Ausführungsformen sowie die Verwendung des erfindungsgemäßen Beschichtungspulvers für die einschichtige Beschichtung ist es möglich, ungebrannte und geschrühte Substrate zu glasieren, engobieren oder dekorieren, ohne daß es beim Brand zu den bisher auftretenden flächigen Glasurfehlern kommt. Das Beschichtungspulver CP_{AB} läßt sich in einfacher Weise durch intensives Mischen der Bestandteile herstellen. Die Auswahl der Bestandteile bereitet keine Probleme, da es sich um in der keramischen Industrie übliche Rohstoffe oder Zwischenprodukte, wie insbesondere Glasfritten, sowie Zwischenprodukte, wie insbesondere Glasfritten, sowie bekannte Hilfsstoffe handelt. Die erfindungsgemäßen Beschichtungspulver eignen sich in besonderer Weise zur Herstellung von glasierten Fliesen im Einmal-Schnellbrand, wobei ungebrannte Fliesen elektrostatisch beschichtet und anschließend gebrannt werden (Monoporosa).

### Beispiele (E) und Vergleichsbeispiele (CE)

Hergestellt wurden Beschichtungspulver durch intensives Mischen der in Tabelle 1 genannten Komponenten in einer Intensiv-Mischvorrichtung (Pulverisette-Mühle 14 ohne Siebaufsatz der Firma Fritsch, Idar-Oberstein (DE)) bei 12000 UpM mit 2 Durchgängen.

**Tabelle 1**

| | |
|---|---|
| Pulver A | Glasur 32366/4 (= Glasfritte) : 94 % |
| | Polyethylenwachs (= Haftmittel): 5,8 % |
| | Aerosil 200 (= Fluidisierungsmittel): 0,2 % |
| Pulver B 1 | Pulver A + 1 % Fluß TDF 5512a |
| Pulver B 2 | Pulver A + 3 % Fluß TDF 5512a |
| Pulver B 3 | Pulver A + 5 % Fluß TDF 5512a |
| Pulver B 4 | Pulver A + 10 % Fluß TDF 5512a |
| Pulver B 5 | Pulver A + 5 % Fluß RD 2002 |
| Pulver B 6 | Pulver A + 5 % Fluß 106053 |
| Pulver C | Engobe (79/507/A)- |
| | Trockengranulat: 94 % |
| | Polyethylenwachs: 5,8 % |
| | Aerosil 200: 0,2 % |
| Pulver D 1 | Pulver C + 1 % Fluß TDF 5512a |
| Pulver D 2 | Pulver C + 3 % Fluß TDF 5512a |
| Pulver D 3 | Pulver C + 5 % Fluß TDF 5512a |
| Pulver D 4 | Pulver C + 10 % Fluß TDF 5512a |
| Pulver D 5 | Pulver C + 5 % Fluß RD 2002 |
| Pulver D 6 | Pulver C + 5 % Fluß 106053 |

Bei den einzelnen Komponenten handelt es sich um:
* Glasur 32366/4: Glasfritte 290/498 der Firma Cerdec AG mit optimiertem Kornband - d₁₀ 3,7 µm, d₅₀ 19,5 µm, d₉₀ 34,5 µm. Die Fritte enthält als Hauptkomponenten SiO₂, ZnO, CaO, MgO, B₂O₃, Al₂O₃, ZrO₂ und K₂O. Erweichungsbeginn T(EB) 940 °C, Halbkugeltemperatur T(HK) = 1080 °C (bestimmt im Erhitzungsmikroskop).
* Fluß TDF 5512a: Glasfritte auf der Basis von SiO₂, Bi₂O₃, Na₂O, K₂O, Li₂O und Al₂O₃; Erweichungsbeginn T(EB) 550 °C, Halbkugelpunkt T(HK) 770 °C, beide Werte bestimmt im Erhitzungsmikroskop. Kornspektrum d₁₀ 0,5 µm, d₅₀ 1,4 µm, d₉₀ 6,1 µm.
* Fluß RD 2002: Bleifreie Glasfritte auf der Basis von SiO₂, Bi₂O₃, ZnO, B₂O₃ und Na₂O als Hauptkomponenten. Erweichungsbeginn T(EB) 550 °C, Halbkugelpunkt T(HK) 680 °C, jeweils bestimmt im Erhitzungsmikroskop.
* Fluß 106053: Glasfritte auf Basis SiO₂, ZnO, B₂O₃, Na₂O als Hauptkomponenten. T(EB) 510 °C, T(HK) 620 °C (bestimmt im Erhitzungsmikroskop). Kornspektrum d₁₀ 0,8 µm, d₅₀ 3,0 µm, d₉₀ 11,5 µm.
* Polyethylenwachs: Erweichungstemperatur 135 °C; Kornspektrum d₁₀ 1,8 µm, d₅₀ 10,5 µm, d₉₀ 16,9 µm.

Beschichtung: Rohscherben (15 x 20 cm) für Wandfliesen (Firma Grohn). Besprüht wurde in einer Beschichtungskammer. Die Fliesen wurden teilweise vor der Beschichtung 30 Min auf 180 °C vorerwärmt, teilweise ohne Vorerwärmung eingesetzt - siehe Anmerkungen zu Tabelle 2. Die Hochspannungspistole wurde mit 70 kV und 60 µA betrieben, die Dosierluftmenge und Zerstäuberluftmenge wurde so eingestellt, daß der Durchsatz 100 g Pulver pro Minute betrug.

Beschichtet wurde einschichtig als auch zweischichtig - siehe Tabelle 2. Bei zweischichtigem Auftrag wurde, um eine ausreichende Menge Glasur als Oberschicht auftragen zu können, die mit der Unterschicht versehene Fliese nach dem Auftrag der Unterschicht 30 Min auf 180 °C erhitzt.

Gebrannt wurde im Einbrand-Schnellbrandverfahren in einem Gaskammerofen bei Tₘₐₓ = 1150 °C bei einer Brenndauer von insgesamt 48 Minuten. Nach dem Brand wurde der Flächenanteil der Glasurfehler (Abroller), bezogen auf die Fliesenfläche, an jeweils mehreren Fliesen ermittelt.

**Tabelle 2a:**

| Glasuren - einschichtig Pulverauftrag je 21 g / Fliese | | |
|---|---|---|
| Nr. | Pulver | Abroller (%) |
| CE 1 | A | 20 - 30 |
| E 1 | B 1 | 10 - 20 *) |
| E 2 | B 2 | 5 - 10 *) |
| E 3 | B 3 | 0**) |
| E 4 | B 4 | 0 **) |
| E 5 | B 5 | 0 **) |
| E 6 | B 6 | 0 **) |

| | | |
|---|---|---|
| *) Auftrag bei E 1 und E 2 auf den kalten Scherben; bei Auftrag auf den 30 Minuten auf 180 °C vorerwärmten Scherben veränderte sich der Wert der Abroller bei Einsatz der Pulver B 1 und B 2 praktisch nicht. | | |
| **) Auftrag bei E 3 bis E 6 auf den 30 Minuten auf 180 °C vorerwärmten Scherben. Bei E 3 wurde auch auf nicht vorerwärmte Fliesen aufgetragen, wobei hierbei jedoch die geforderte Menge Beschichtungspulver nicht vollständig aufgebracht werden konnte. | | |

**Tabelle 2b:**

| Glasuren - zweischichtig Unterschicht 5 g und Oberschicht 16 g / Fliese | | | |
|---|---|---|---|
| Nr. | Pulver Unterschicht | Pulver Oberschicht | Abroller (%) |
| E 7 | B 1 | A | 20 - 30 |
| E 8 | B 2 | A | 5 - 10 |
| E 9 | B 3 | A | 0 |
| E 10 | B 4 | A | 0 |
| Anmerkung: Nach Auftrag der Unterschicht wurde 30 Minuten auf 180 °C erwärmt, danach die Oberschicht auf die erwärmte beschichtete Fliese elektrostatisch aufgebracht. | | | |

**Tabelle 2c:**

| Engoben - einschichtig 8 g / Fliese | | |
|---|---|---|
| Nr. | Pulver | Abroller (%) |
| CE 2 | C | 20 - 30 |
| E 11 | D 1 | 10 - 20 |
| E 12 | D 2 | 0 - 5 |
| E 13 | D 3 | 0 |
| E 14 | D 4 | 0 |
| E 15 | D 5 | 0 |
| E 16 | D 6 | 0 |
| Anmerkung: Auftrag der Pulver auf den nicht-vorerwärmten Rohscherben | | |

**Tabelle 2d:**

| Engoben - zweischichtig 2 g / Fliese in der Unter- und 6 g / Fliese in der Oberschicht | | | |
|---|---|---|---|
| Nr. | Pulver | Pulver | Abroller (%) |
| E 17 | D 1 | C | 10 - 20 |
| E 18 | D 2 | C | 0 - 5 |
| E 19 | D 3 | C | 0 |
| E 20 | D 4 | C | 0 |
| Anmerkung: Auftrag ohne Vorerwärmung der Scherben | | | |

Die Beispiele zeigen, daß die Abroller-Fehler bei beiden alternativen Ausführungsformen der Erfindung bereits durch die Anwesenheit einer sehr geringen Menge einer Zusammensetzung A (= Fluß) im Beschichtungspulver, das unmittelbar auf das Substrat aufgebracht wird, deutlich abnehmen und schließlich auf 0 % absinken.

Am Beispiel der Herstellung des Beschichtungspulvers der Zusammensetzung A wurde auch der Einfluß der eingesetzten Mischvorrichtung untersucht: Unter Einsatz der oben genannten Pulverisette betrug bei 8000 UpM und 2 Durchgängen der Anteil der Fliesen mit Abrollern 30 bis 40 %, bei 12000 UpM und 2 Durchgängen 20 bis 30 %. Unter Einsatz eines Pflugscharmischers (Lödige-Mischer) betrug der Anteil der Fliesen mit Abrollern bei einer Mischzeit von 20 Minuten 60 bis 70 % und bei einer Mischzeit von 50 Minuten 40 bis 50 %.

### Beispiel E 21

Eine weiße Zirkoniumfritte (Nr. 997633) mit einem T_{EB} von 1020 °C und eine Flußfritte (TDF 5512 A) mit einem T_{EB} von 550 °C wurden jeweils in einer Strahlmühle gemahlen und die Pulver gesichtet, so daß d₅₀ 20 µm war und keine Partikel größer 60 µm und kleiner 0,5 µm anwesend waren.

Die gesichteten Fritten wurden im Gew.-Verhältnis 95 zu 5 gemischt. Zum Gemisch wurden 4,75 Gew.-% kugelförmiges Polyethylenwachs mit engem Kornband (um 10 µm) und einem Molekulargewicht von 8700 und 0,2 Gew.-% pyrogene Kieselsäure (Aerosil 200® der Degussa AG) gegeben und grob gemischt. Die Mischung wurde durch 2-maligen Durchgang durch eine Stiftmühle (Pulverisette) bei 10000 UpM homogenisiert. Das Pulver wurde auf ungebrannte Tonziegel (200 x 150 mm) unter Verwendung einer Super-Corona-Elektrostatik-Sprühpistole aufgesprüht - 70 kV, Trägerluft 0,5 bar, Luftmenge 5 m³/h. 21 g Pulver wurde aufgesprüht, danach der besprühte Ziegel 10 Minuten auf 180 °C geheizt.

Nach dem Abkühlen war die Beschichtung haftfest und griffest. Gebrannt wurde 40 Minuten im Durchschubofen bei einer Spitzentemperatur von 1150 °C. Die Glasur der Ziegel war zusammenhängend, fehlerfrei und glänzend.

## Patentansprüche

1. Verfahren zur Herstellung einer keramischen und/oder glasigen Beschichtung, insbesondere einer Glasur, auf einem keramischen Substrat, umfassend elektrostatischer Auftrag eines Beschichtungspulvers und Brennen des beschichteten Substrats,
**dadurch gekennzeichnet,**
**daß** man ein Beschichtungspulver CP_{AB} verwendet, das 1 bis 50 Gew.-% einer schichtbildenden Zusammensetzung A mit einem Erweichungsbeginn im Bereich von 400 bis 750 °C und 99 bis 50 Gew.-% einer schichtbildenden Zusammensetzung B mit einem Erweichungsbeginn im Bereich von oberhalb 750 bis 1100 °C enthält,
oder, daß man unter Verwendung eines mindestens 5 Gew.-% der schichtbildenden Zusammensetzung A enthaltenden Beschichtungspulvers CP_{U} auf das keramische Substrat eine Unterschicht und darüber unter Verwendung eines mindestens 50 Gew.-% der schichtbildenden Zusammensetzung B enthaltenden Beschichtungspulvers CP_{O} eine Oberschicht aufbringt, wobei mindestens eine der beiden Schichten elektrostatisch appliziert wird und die Dicke der Unterschicht mindestens 1 % Dicke der gesamten Beschichtung ausmacht.

2. Verfahren nach Anspruch 1,
**dadurch gekennzeichnet,**
**daß** das zu verwendende Beschichtungspulver CP_{AB} im wesentlichen aus
1 bis 50 Gew.-% der Zusammensetzung A,
99 bis 50 Gew.-% der Zusammensetzung B,
0 bis 20 Gew.-% eines oder mehrerer chemisch oder thermisch aktivierbarer Haftmittel,
0 bis 20 Gew.-% Pigmenten und
0 bis 5 Gew.-% Hilfsmitteln, umfassend Fluidisierungshilfsmittel und den Oberflächenwiderstand des Beschichtungspulvers erhöhende Hilfsstoffe, besteht.

3. Verfahren nach Anspruch 1 oder 2,
**dadurch gekennzeichnet,**
**daß** die Zusammensetzung A eine oder mehrere Glasfritten in einer Menge von 80 bis 100 Gew.-%, bezogen auf schichtbildende Komponenten, enthält.

4. Verfahren nach einem der Ansprüche 1 bis 3,
**dadurch gekennzeichnet,**
**daß** die Zusammensetzung B eine oder mehrere Glasfritten in einer Menge von 30 bis 100 Gew.-%, bezogen auf schichtbildende Komponenten, umfaßt.

5. Verfahren nach einem der Ansprüche 1 bis 4,
**dadurch gekennzeichnet,**
**daß** das zu verwendende Beschichtungspulver CP_{AB} eine Zusammensetzung A in einer Menge von 2,5 bis 25 Gew.-% und eine Zusammensetzung B in einer Menge von 75 bis 97,5 Gew.-%, jeweils bezogen auf schichtbildende Komponenten, enthält.

6. Verfahren nach einem der Ansprüche 1 bis 5,
**dadurch gekennzeichnet,**
**daß** der Erweichungsbeginn der Zusammensetzung A im Bereich von 450 bis 600 °C und der Erweichungsbeginn der Zusammensetzung B im Bereich von 800 bis 1050 °C liegt.

7. Verfahren nach einem der Ansprüche 1 bis 6,
**dadurch gekennzeichnet,**
**daß** man als Substrat einen ungebrannten oder geschrühten Scherben verwendet.

8. Verfahren nach einem der Ansprüche 1 bis 4,
**dadurch gekennzeichnet,**
**daß** man die Unter- und die Oberschicht elektrostatisch aufbringt und die Dicke der Unterschicht 2 bis 30 % der gesamten Beschichtung ausmacht.

9. Elektrostatisch applizierbares Beschichtungspulver CP_{AB}, umfassend eine beim keramischen Brand schichtbildende Zusammensetzung,
**dadurch gekennzeichnet,**
**daß** es 1 bis 50 Gew.-% einer schichtbildenden Zusammensetzung A mit einem Erweichungsbeginn im Bereich von 400 bis 750 °C und 99 bis 50 Gew.-% einer schichtbildenden Zusammensetzung B mit einem Erweichungsbeginn im Bereich von oberhalb 750 bis 1100 °C und zusätzlich bis zu 20 Gew.-% eines oder mehrerer chemisch oder thermisch aktivierbarer Haftmittel aus der Reihe organischer Polymerer enthält.

10. Beschichtungspulver nach Anspruch 9,
**dadurch gekennzeichnet,**
**daß** die schichtbildenden Zusammensetzungen zusammen eine Kornverteilung mit einem d₉₀-Wert von kleiner 35 µm, einen d₅₀-Wert im Bereich von 5 bis 25 µm und einen d₁₀-Wert von gleich oder größer 2 µm aufweist.

11. Beschichtungspulver nach Anspruch 9 oder 10,
**dadurch gekennzeichnet,**
**daß** es die Zusammensetzung A in einer Menge von 2,5 bis 25 Gew.-% und die Zusammensetzung B in einer Menge von 75 bis 97,5 Gew.-%, jeweils bezogen auf die Summe der schichtbildenden Komponenten, enthält.

12. Beschichtungspulver nach einem der Ansprüche 9 bis 11,
**dadurch gekennzeichnet,**
**daß** die Zusammensetzung A zu 80 bis 100 Gew.-% und die Zusammensetzung B zu 30 bis 100 Gew.-% aus einer oder mehreren Glasfritten besteht.

13. Beschichtungspulver nach einem der Ansprüche 9 bis 12,
**dadurch gekennzeichnet,**
**daß** es als Haftmittel ein hydrcphiles und ein hydrophobes Polymer enthält.

14. Beschichtungspulver nach einem der Ansprüche 9 bis 13,
**dadurch gekennzeichnet,**
**daß** das Haftmittel ein thermoplastisches organisches Polymer, insbesondere Polyethylen, ist.

15. Beschichtungspulver nach einem der Ansprüche 9 bis 14,
**dadurch gekennzeichnet,**
**daß** es zusätzlich bis zu 5 Gew.-% Hilfsmittel aus der Reihe der Fluidisierungshilfsmittel und Mittel zur Erhöhung des spezifischen elektrischen Widerstands enthält, wobei letztere auch als Beschichtung auf den Partikeln der glasbildenden Zusammensetzungen vorliegen können.

16. Beschichtungspulver nach Anspruch 15,
**dadurch gekennzeichnet,**
**daß** es bis zu 3 Gew.-% einer pyrogenen Kieselsäure als Fluidisierungshilfsmittel und/oder bis zu 3 Gew.-% eines Salzes einer Carbonsäure mit 1 bis 6 C-Atomen, insbesondere 2 C-Atomen, und einem Alkalimetall-, Erdalkalimetall- oder Erdmetallkation, insbesondere einem Mg- oder Ca-Kation, als Mittel zur Erhöhung des spezifischen elektrischen Widerstands enthält.

17. Verwendung des Beschichtungspulvers gemäß einem der Ansprüche 9 bis 16 zur Herstellung von keramischen Beschichtungen, insbesondere Glasuren und Engoben, auf einem keramischen, insbesondere ungebrannten Substrat, umfassend elektrostatischen Pulverauftrag.

18. Verfahren zur Herstellung eines elektrostatisch applizierbaren Beschichtungspulvers gemäß einem der Ansprüche 9 bis 16, umfassend intensives Mischen der einen oder mehreren einbrennfähigen schichtbildenden Zusammensetzungen und des einen oder der mehreren chemisch oder physikalisch aktivierbaren Haftmittel und, soweit anwesend, weiterer Bestandteile des Beschichtungspulvers,
**dadurch gekennzeichnet,**
**daß** man das Mischen unter Verwendung einer Intensivmühle aus der Reihe der Schlag- und Strahlmühlen durchführt.

19. Verfahren nach Anspruch 18,
**dadurch gekennzeichnet,**
**daß** man das Mischen unter Verwendung einer Stift- oder Stift-Schlagmühle bei einer Drehzahl des Rotors von 2000 bis 20000 UpM, insbesondere 5000 bis 15000 UpM, durchführt.

## Claims

1. Method of producing a ceramic and/or vitreous coating, especially a glaze, on a ceramic substrate, comprising the electrostatic application of a coating powder and baking of the coated substrate,
**characterised in that**
there is used a coating powder CP_{AB} containing from 1 to 50 wt.% of a layer-forming composition A having a softening point in the range from 400 to 750°C, and from 99 to 50 wt.% of a layer-forming composition B having a softening point in the range from above 750 to 1100°C, or **in that** a bottom layer is applied to the ceramic substrate using a coating powder CP_{U} containing at least 5 wt.% of the layer-forming composition A and a top layer is applied over the bottom layer using a coating powder CP_{O} containing at least 50 wt.% of the layer-forming composition B, at least one of the two layers being applied electrostatically and the thickness of the bottom layer accounting for at least 1 % of the thickness of the entire coating.

2. Method according to claim 1,
**characterised in that**
the coating powder CP_{AB} to be used consists essentially of
from 1 to 50 wt.% of composition A,
from 99 to 50 wt.% of composition B,
from 0 to 20 wt.% of one or more chemically or thermally activatable bonding agents,
from 0 to 20 wt.% of pigments, and
from 0 to 5 wt.% of auxiliary agents, including fluidising aids and auxiliary substances increasing the surface resistance of the coating powder.

3. Method according to claim 1 or 2,
**characterised in that**
composition A contains one or more glass frits in an amount of from 80 to 100 wt.%, based on layer-forming components.

4. Method according to any one of claims 1 to 3,
**characterised in that**
composition B comprises one or more glass frits in an amount of from 30 to 100 wt.%, based on layer-forming components.

5. Method according to any one of claims 1 to 4,
**characterised in that**
the coating powder CP_{AB} to be used contains a composition A in an amount of from 2.5 to 25 wt.% and a composition B in an amount of from 75 to 97.5 wt.%, in each case based on layer-forming components.

6. Method according to any one of claims 1 to 5,
**characterised in that**
the softening point of composition A is in the range from 450 to 600°C and the softening point of composition B is in the range from 800 to 1050°C.

7. Method according to any one of claims 1 to 6,
**characterised in that**
an unbaked or biscuit-baked body is used as the substrate.

8. Method according to any one of claims 1 to 4,
**characterised in that**
the bottom layer and the top layer are applied electrostatically and the thickness of the bottom layer accounts for from 2 to 30 % of the entire coating.

9. Electrostatically applicable coating powder CP_{AB} containing a composition that forms a layer on ceramic baking,
**characterised in that**
it contains from 1 to 50 wt.% of a layer-forming composition A having a softening point in the range from 400 to 750°C, and from 99 to 50 wt.% of a layer-forming composition B having a softening point in the range from above 750 to 1100°C, and additionally up to 20 wt.% of one or more chemically or thermally activatable bonding agents from the group of organic polymers.

10. Coating powder according to claim 9,
**characterised in that**
the layer-forming compositions together have a grain distribution having a d₉₀ value less than 35 µm, a d₅₀ value in the range from 5 to 25 µm and a d₁₀ value equal to or greater than 2 µm.

11. Coating powder according to claim 9 or 10,
**characterised in that**
it contains composition A in an amount of from 2.5 to 25 wt.% and composition B in an amount of from 75 to 97.5 wt.%, in each case based on the sum of the layer-forming components.

12. Coating powder according to any one of claims 9 to 11,
**characterised in that**
composition A consists of from 80 to 100 wt.% of one or more glass frits, and composition B consists of from 30 to 100 wt.% of one or more glass frits.

13. Coating powder according to any one of claims 9 to 12,
**characterised in that**
it contains as the bonding agent a hydrophilic and a hydrophobic polymer.

14. Coating powder according to any one of claims 9 to 13,
**characterised in that**
the bonding agent is a thermoplastic organic polymer, especially polyethylene.

15. Coating powder according to any one of claims 9 to 14,
**characterised in that**
it additionally contains up to 5 wt.% of auxiliary agents from the group of fluidising aids and agents for increasing the specific resistance, it also being possible for the latter to be present in the form of a coating on the particles of the glass-forming composition.

16. Coating powder according to claim 15,
**characterised in that**
it contains up to 3 wt.% of a pyrogenic silica as fluidising aid and/or up to 3 wt.% of a salt of a carboxylic acid having from 1 to 6 carbon atoms, especially 2 carbon atoms, and an alkali metal, alkaline earth metal or earth metal cation, especially a Mg or Ca cation, as agent for increasing the specific resistance.

17. Use of the coating powder according to any one of claims 9 to 16 in the production of ceramic coatings, especially glazes and engobes, on a ceramic, especially an unbaked, substrate, comprising electrostatic powder application.

18. Method of producing an electrostatically applicable coating powder according to any one of claims 9 to 16, comprising intensive mixing of the one or more bakeable layer-forming compositions and of the one or more chemically or physically activatable bonding agents and, where present, of further constituents of the coating powder,
which method is **characterised in that**
the mixing is carried out using an intensive mill from the group of the impact grinding mills and jet mills.

19. Method according to claim 18,
**characterised in that**
the mixing is carried out using a pinned disk mill or a pinned disk/impact grinding mill at a rotor speed of from 2000 to 20,000 rpm, especially from 5000 to 15,000 rpm.

## Revendications

1. Procédé pour la fabrication de revêtements céramiques et/ou vitreux, en particulier un émaillage, sur un substrat céramique, qui comprend l'application électrostatique d'une poudre de revêtement et calcination du substrat revêtu,
**caractérisé en qu'**
on utilise une poudre de revêtement CP_{AB} qui contient de 1 à 50 % en poids d'une composition A stratifiante ayant un début de ramollissement dans la zone de 400 à 750°C et de 99 à 50 % en poids d'une composition B stratifiante ayant un début de ramollissement dans la zone allant - d'au-dessus de 750°C à 1100°C, ou bien en utilisant une poudre de revêtement CPᵤ contenant au moins 5 % en poids de la composition A stratifiante, on obtient sur le substrat en céramique une couche inférieure et par-dessus cela, en utilisant une poudre de revêtement CPₒ contenant au moins 50 % en poids de la composition B stratifiante, une couche supérieure, au moins une des deux couches étant appliquée électrostatiquement et l'épaisseur de la couche inférieure représentant au moins 1 % de l'épaisseur du revêtement total.

2. Procédé selon la revendication 1,
**caractérisé en ce que**
la poudre de revêtement CP_{AB} à utiliser consiste essentiellement en
de 1 à 50 % en poids de la composition A,
de 99 à 50 % en poids de la composition B,
de 0 à 20 % en poids d'un ou plusieurs agents d'adhésion activables chimiquement ou thermiquement,
de 0 à 20 % en poids de pigments et
de 0 à 5 % en poids d'adjuvants comprenant des adjuvants de fluidification, et des adjuvants qui augmentent la résistance en surface de la poudre de revêtement.

3. Procédé selon la revendication 1 ou 2,
**caractérisé en ce que**
la composition A renferme une ou plusieurs frittes de verre en une quantité allant de 80 à 100 % en poids, rapporté aux composants stratifiants.

4. Procédé selon l'une des revendications 1 à 3,
**caractérisé en ce que**
la composition B inclut une ou plusieurs frittes de verre, en une quantité allant de 30 à 100 % en poids, rapporté aux composants stratifiants qui forment une couche.

5. Procédé selon l'une des revendications 1 à 4,
**caractérisé en ce que**
la poudre de revêtement à utiliser CP_{AB} renferme une composition A en une quantité allant de 2,5 à 25 % en poids et une composition B en une quantité allant de 75 à 97,5 % en poids, à chaque fois rapporté aux composants stratifiants.

6. Procédé selon l'une des revendications 1 à 5,
**caractérisé en ce que**
le début du ramollissement de la composition A, se situe dans la zone de 450 à 600°C, et le début du ramollissement de la composition B dans la zone de 800 à 1050°C.

7. Procédé selon l'une des revendications 1 à 6,
**caractérisé en ce qu'**
on utilise comme substrat une pâte non calcinée ou précuite.

8. Procédé selon l'une des revendications 1 à 4,
**caractérisé en ce qu'**
on applique la couche inférieure et la couche supérieure électrostatiquement et l'épaisseur de la couche inférieure représente de 2 à 30 % du revêtement total.

9. Poudre de revêtement applicable électrostatiquement CP_{AB}, comprenant une composition stratifiante par cuisson céramique,
**caractérisé en ce qu'**
elle contient de 1 à 50 % en poids d'une composition A stratifiante ayant un début de ramollissement dans la zone de 400 à 750°C et de 99 à 50 % en poids d'une composition B stratifiante ayant un début de ramollissement dans la zone d'au-dessus de 750 à 1100°C et en supplément jusqu'à 20 % en poids, d'un ou plusieurs adhésifs activables chimiquement ou thermiquement, choisis dans la série des polymères organiques.

10. Poudre de revêtement selon la revendication 9,
**caractérisée en ce que**
les compositions stratifiantes possèdent ensemble une granulométrie avec une valeur d₉₀ inférieure à 35 µm, une valeur d₅₀ dans la zone de 5 à 25 µm et une valeur d₁₀ égale ou supérieure à 2 µm.

11. Poudre de revêtement selon la revendication 9 ou la revendication 10,
**caractérisée en ce qu'**
elle renferme la composition A en une quantité allant de 2,5 à 25 % en poids et la composition B en une quantité allant de 75 à 97,5 % en poids, à chaque fois rapporté à la somme des composants stratifiants.

12. Poudre de revêtement selon l'une des revendications 9 à 11,
**caractérisée en ce que**
la composition A consiste pour de 80 à 100 % en poids et la composition B pour de 30 à 100 % en poids, en une ou plusieurs frittes de verre.

13. Poudre de revêtement selon l'une des revendications 9 à 12,
**caractérisée en ce qu'**
elle renferme comme adhésif un polymère hydrophile et un polymère hydrophobe.

14. Poudre de revêtement selon l'une des revendications 9 à 13,
**caractérisée en ce que**
l'adhésif est un polymère organique thermoplastique, en particulier du polyéthylène.

15. Poudre de revêtement selon l'une des revendications 9 à 14,
**caractérisée en ce qu'**
elle renferme en supplément jusqu'à 5 % en poids d'adjuvant choisi dans la série des adjuvants de fluidification et des agents pour l'augmentation de la résistance électrique spécifique, pour lequel ces derniers peuvent se présenter aussi comme revêtements sur les particules des compositions vitrifiantes.

16. Poudre de revêtement selon la revendication 15,
**caractérisée en ce qu'**
elle contient jusqu'à 3 % en poids d'un acide silicique pyrogénique comme adjuvant de fluidification et/ou jusqu'à 3 % en poids d'un sel d'un acide carboxylique ayant de 1 à 6 atomes de carbone, en particulier 2 atomes de carbone et avec un cation de métal alcalin, de métal alcalino-terreux ou d'un cation de métal terreux, en particulier un cation Mg ou Ca, en tant que moyen pour augmenter la résistance électrique spécifique.

17. Utilisation de la poudre de revêtement conformément à l'une des revendications 9 à 16, pour la fabrication de revêtements céramiques, en particulier d'émaillages et d'engobes, sur un substrat céramique, en particulier non calciné, comprenant une application de poudre électrostatique.

18. Procédé de fabrication d'une poudre de revêtement applicable électrostatiquement, conformément à l'une des revendications 9 à 16, comprenant le mélange intensif d'une ou plusieurs compositions stratifiées aptes à la cuisson et d'un ou plusieurs adhésifs activables chimiquement ou physiquement et pour autant qu'ils soient présents, d'autres constituants de la poudre de revêtement,
**caractérisé en ce qu'**
on effectue le mélange en utilisant un broyeur intensif choisi dans la série des broyeurs à marteaux et des broyeurs à jet d'air.

19. Procédé selon la revendication 18,
**caractérisé en ce qu'**
on effectue le mélange en utilisant un broyeur Carr ou un broyeur Carr à marteaux à un nombre de tours du rotor allant de 2000 à 20000 t/mn, en particulier de 5000 à 15000 t/mn.
